# FASCICULE DE BREVET EUROPEEN

(11) **EP 1 541 418 B1**
(45) Date de publication et mention de la délivrance du brevet: **07.06.2006**
(21) Numéro de dépôt: 04300792.1
(22) Date de dépôt: 16.11.2004
(51) Int. Cl.: B60R 5/04, B60R 7/04, B60P 7/08, B60R 21/06

(54) **Véhicule automobile comprenant un système de rangement d'un tendelet**
Kraftfahrzeug mit einem Unterbringungsystem für eine Gepäckraumabdeckung
Motor vehicle with a system for stowing a luggage compartment cover

(30) Priorité: 12.12.2003 FR 0351042
(43) Date de publication de la demande: 15.06.2005
(73) Titulaire: Renault s.a.s., 92109 Boulogne Billancourt (FR)
(72) Inventeur: Boyot, Lionel, F-78370 Plaisir (FR); Gallinato-Contini, Roland, F-83780 Flayosc (FR)

(56) Documents cités:
- EP-A- 0 754 594
- FR-A- 2 267 908
- FR-A- 2 755 655
- US-A- 5 011 208

## Description

Le sujet de cette invention est un véhicule automobile ayant un système de rangement d'un tendelet.

Un véhicule comprenant un tendelet et un système de rangement du tendelet placé sur le plancher de l'habitacle comprenant les caractéristiques du préamble de la revendication 1 est connu du document FR-A-2 755 655.

On appelle tendelet une toile destinée à couvrir un compartiment de bagages quand celui-ci n'est pas séparé de l'habitacle. Il est ordinairement déployé d'un rouleau placé au niveau du bord arrière supérieur de la banquette arrière, et peut se ré-enrouler à cet endroit quand il est relâché. L'état enroulé permet d'empiler les bagages sur une plus grande hauteur, mais le tendelet continue de gêner puisqu'il forme une butée pour les bagages supérieurs qu'on pousse vers l'avant. C'est pourquoi il est généralement possible de démonter le tendelet. Les véhicules connus sont cependant dépourvus d'un système qui permettrait de ranger ou de retenir le tendelet démonté. Un tel système est proposé avec l'invention afin d'améliorer le confort dans le véhicule.

Le véhicule automobile équipé de l'invention comprend, outre un habitacle, un compartiment à bagages, un plancher de l'habitacle et un tendelet pouvant prendre un état enroulé, un système de rangement du tendelet à l'état enroulé placé sur le plancher de l'habitacle et comprenant deux réceptacles opposés pour les extrémités du tendelet.

Un tel système permet de déposer le tendelet démonté au pied de la banquette arrière ou même sous elle, en le retenant à une position fixe qui n'occasionne que peu de gêne aux passagers éventuels.

Dans une conception préférée, le système comprend des paumelles de fixation au plancher et des charnières d'axe horizontal reliant les réceptacles aux paumelles : les réceptacles, en forme de coque peu profonde, peuvent être couchés sur les paumelles ou à coté d'elles quand ils sont inutilisés, en ne formant qu'un petit relief à la surface du plancher.

Ces aspects de l'invention et d'autres seront décrits au moyen des figures annexées à cette description :
- la figure 1 est une figure d'une vue générale du véhicule,
- les figure 2 et 3 représentent les portions principales du système de rangement,

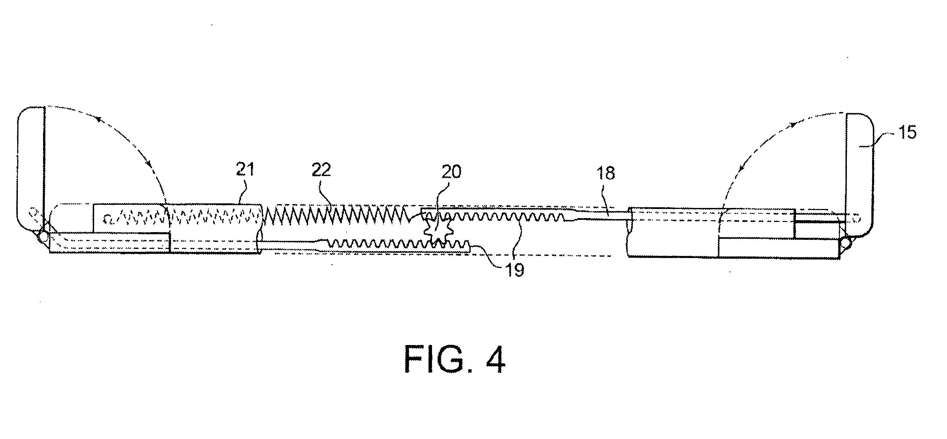

et la figure 4 représente un mécanisme d'interconnexion des réceptacles.

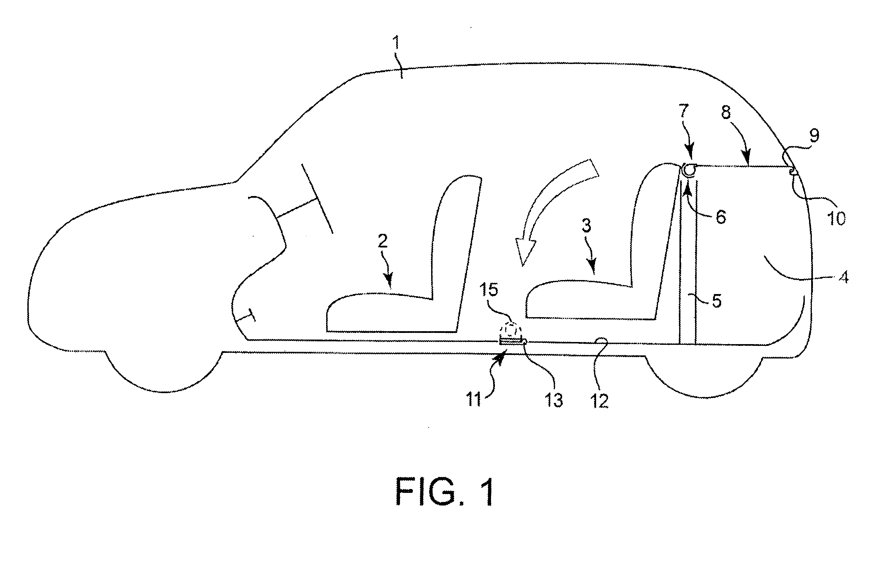

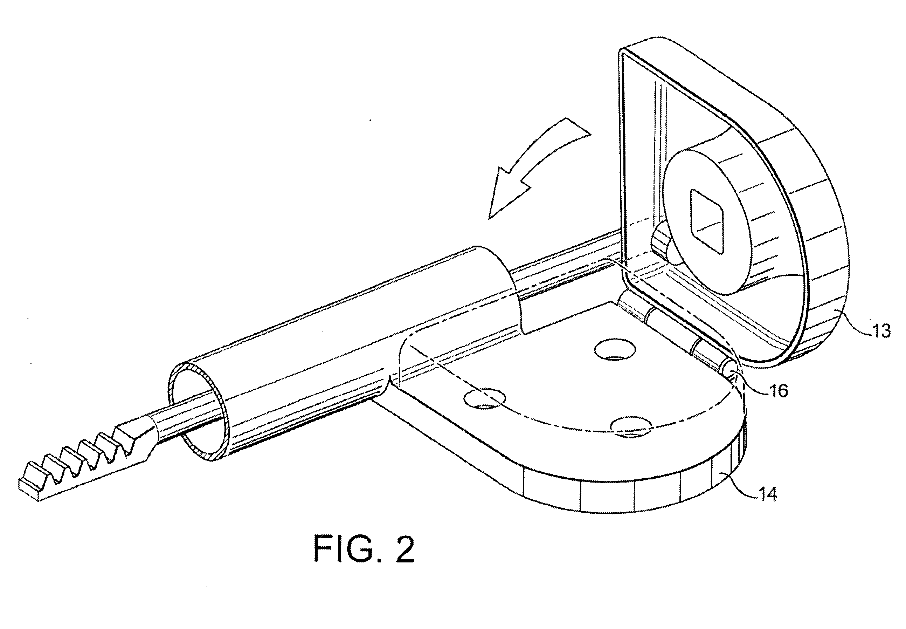

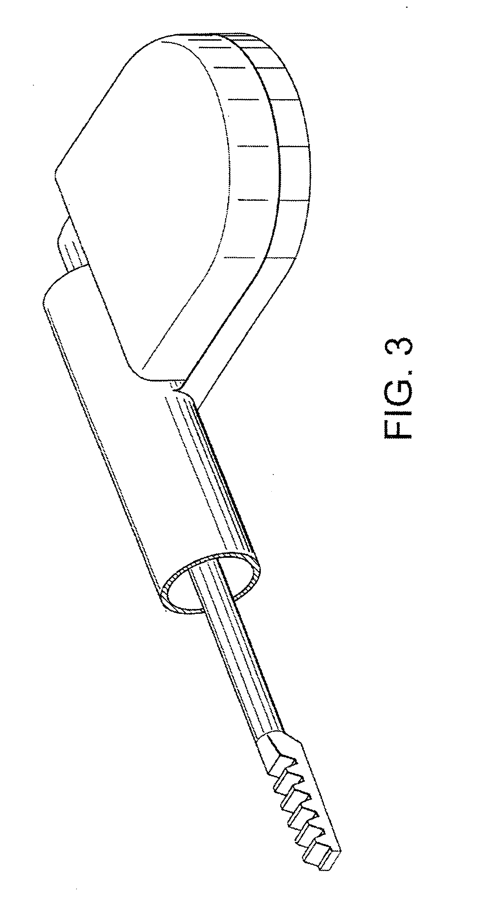

La figure 1 représente un véhicule automobile comprenant un habitacle pour les occupants 1, une rangée de sièges avant 2, une banquette arrière 3 et un compartiment à bagages 4 derrière l'habitacle 1. Des montants 5 s'élevant sur les côtés de la carrosserie, juste derrière la banquette arrière 3, comportent un support 6 d'un rouleau 7 d'un tendelet qui comprend encore une toile 8 dont l'extrémité libre porte des doigts 9 reçus dans des logements 10 établis sur les côtés de la carrosserie. Le tendelet est mis à l'état enroulé en détachant les doigts 9 des logements 10, et démonté en détachant le rouleau 7 des supports 6. Il peut alors être déplacé vers l'avant par-dessus la banquette arrière 3 et déposé sur un système de rangement 11 qui n'est que partiellement visible sur la figure 1. Le système de rangement 11 est placé sur le plancher 12 de l'habitacle 1, et juste devant un pareclose 13 de la banquette arrière 3 de manière à s'étendre sous elle ou au pied d'elle, et normalement derrière les pieds des passagers éventuels. Le système de rangement 11 comprend deux unités latérales symétriques dont l'une est représentée aux figures 2 et 3. Elles comprennent une paumelle 14 vissée au plancher 12, un réceptacle 15 en forme de coque peu profonde et une charnière 16 d'axe horizontal et longitudinal reliant le réceptacle 15 à la paumelle 14.

Une extrémité du rouleau 7 est introduite dans chacun des réceptacles 15, dont le pourtour a une forme adaptée, oblongue, pour s'ajuster à la sienne et à lui interdire de pivoter. Les réceptacles 15 sont alors dressés et opposés, leurs concavités tournées l'une vers l'autre, d'après l'état de la figure 2. Quand le tendelet est en place sur le comportement à bagages 4, les réceptacles prennent favorablement l'état de la figure 3, où ils sont couchés sur des paumelles 14 pour ne prendre que peu de relief sur le plancher 12 grâce au peu de profondeur de leur concavité.

Un mécanisme d'interconnexion relie avantageusement les deux unités extrêmes précédentes. Il comprend une paire de tringles 18 articulées aux réceptacles 15 (à distance des charnières 16) par une extrémité, convergeant l'une vers l'autre et s'achevant, près d'une extrémité libre opposée, par des crémaillères 19 placées l'une devant l'autre et qui engrènent avec deux côtés opposés d'un pignon 20. Tous ces éléments sont enfermés dans un tube 21 qui porte aussi un axe horizontal et longitudinal, non représenté, de rotation du pignon 20. Enfin, un ressort 22 est tendu entre un point fixe du tube 21 et l'extrémité libre d'une des tringles 18.

Ce mécanisme d'interconnexion permet à la fois d'exercer des mouvements opposés sur le réceptacles 15, et donc de les ouvrir simultanément d'une main, tout en les rappelant à la position couchée dès qu'ils sont relâchés : le ressort 22 tire sur une des tringles 18 et le réceptacle 15 correspondant, ce que le couche, tandis que la crémaillère 19 fait tourner le pignon 20, qui impose une mouvement semblable à l'autre des tringles 18 et à l'autre réceptacle 15

Le système de rangement pourrait être placé à d'autres endroits du plancher, ou même sous les sièges avant si le véhicule ne comprend pas d'autres sièges.

De nombreux équivalents de ce système seraient possibles. Le débattement des tringles 18 est suffisant pour que les réceptacles 15 puissent s'ouvrir plus qu'à la position de retenue du rouleau 7, permettant à celui-ci d'être glissé entre eux.

## Revendications

1. Véhicule automobile, comprenant un habitacle (1), un compartiment à bagages (4), un plancher (12) de habitacle (1) et un tendelet (7, 8), pouvant prendre un état enroulé, du compartiment à bagages (4) **caractérisé en ce qu'**il comprend un système de rangement (11) du tendelet (7,8) à l'état enroulé, placé sur le plancher (12) de l'habitacle (1) et comprenant deux réceptacles (15) opposés des extrémités du tendelet (7,8), et **en ce que** le système comprend des paumelles (14) de fixation au plancher (12) et des charnières (16) d'axe horizontal et longitudinal reliant les réceptacles (15) aux paumelles (14).

2. Véhicule automobile selon la revendication 1, **caractérisé en ce qu'**il comprend un mécanisme d'interconnexion des réceptacles (15) conçu pour leur imposer des mouvements opposés.

3. Véhicule automobile selon la revendication 2, **caractérisé en ce que** le mécanisme d'interconnexion des réceptacles (15) comprend un pignon (20) et une paire de tringles (18) à crémaillère (19) joignant respectivement deux côtés opposés du pignon (20)

4. Véhicule automobile selon l'une quelconque des revendications 1, 2 ou 3, **caractérisé en ce que** le système de rangement (11) comprend un ressort (22) de rappel des réceptacles (15) en une position couchée sur les paumelles (14).

5. Véhicule automobile selon l'une quelconque des revendications précédentes, **caractérisé en ce que** le système de rangement (11) est placé sous une banquette arrière (3) de l'habitacle (1).

## Claims

1. A motor vehicle comprising a passenger compartment (1), a luggage compartment (4), a passenger compartment (1) floor (12) and a cover (7, 8) of the luggage compartment (4), which cover can assume a rolled-up state, **characterised in that** it comprises a system (11) for stowing the cover (7, 8) in the rolled-up state, which is placed on the floor (12) of the passenger compartment (1) and comprising two opposite receptacles (15) for the ends of the cover (7, 8) and that the system comprises hinge plates (14) for fixing to the floor (12) and hinges (16) with a horizontal and longitudinal axis connecting the receptacles (15) to the hinge plates (14).

2. A motor vehicle according to claim 1 **characterised in that** it comprises a mechanism for interconnection of the receptacles (15), which is designed to impart opposite movements thereto.

3. A motor vehicle according to claim 2 **characterised in that** the mechanism for interconnection of the receptacles (15) comprises a pinion (20) and a pair of bars (18) with a rack (19) respectively joining two opposite sides of the pinion (20).

4. A motor vehicle according to any one of claims 1, 2 and 3 **characterised in that** the stowing system (11) comprises a spring (22) for returning the receptacles (15) to a position of lying on the hinge plates (14).

5. A motor vehicle according to any one of the preceding claims **characterised in that** the stowing system (11) is placed under a rear seat (3) of the passenger compartment (1).

## Patentansprüche

1. Kraftfahrzeug, aufweisend eine Fahrgastzelle (1), einen Kofferraum für Gepäckstücke (4), einen Boden (12) der Fahrgastzelle (1) und eine Kofferraumabdeckung (7, 8) des Kofferraums für Gepäckstücke (4), welche einen eingerollten Zustand einnehmen kann, **dadurch gekennzeichnet, dass** es ein System zum Verstauen (11) der Kofferraumabdeckung (7, 8) in eingerolltem Zustand aufweist, das auf den Boden (12) der Fahrgastzelle (1) gesetzt ist und welches zwei Aufnahmen (15) aufweist, welche gegenüberliegend zu den Enden der Kofferraumabdeckung (7, 8) sind, und dass das System Bänder (14) zur Befestigung an dem Boden (12) und Scharniere (16) einer horizontalen und longitudinalen Achse aufweist, welche die Aufnahmen (15) mit den Bändern (14) verbinden.

2. Kraftfahrzeug nach Anspruch 1, **dadurch gekennzeichnet, dass** es einen Zwischenverbindungsmechanismus der Aufnahmen (15) aufweist, der ausgestaltet ist, um ihnen entgegengesetzte Bewegungen aufzuerlegen.

3. Kraftfahrzeug nach Anspruch 2, **dadurch gekennzeichnet, dass** der Zwischenverbindungsmechanismus der Aufnahmen (15) ein Ritzel (20) und ein Paar Stangen (18) mit Zahnstangen (19) aufweist, welche jeweils zwei gegenüberliegende Seiten des Ritzels (20) verbinden.

4. Kraftfahrzeug nach irgendeinem der Ansprüche 1, 2 oder 3, **dadurch gekennzeichnet, dass** das System zum Verstauen (11) eine Feder (22) zum Rückstellen der Aufnahmen (15) in eine auf den Bändern (14) liegende Position aufweist.

5. Kraftfahrzeug nach irgendeinem der vorangegangenen Ansprüche, **dadurch gekennzeichnet, dass** das System zum Verstauen (11) unter eine Rückbank (3) der Fahrgastzelle (1) gesetzt ist.
